Europäisches Patentamt

European Patent Office

Office européen des brevets

(11) Veröffentlichungsnummer: **0 081 692**
A2

(12) **EUROPÄISCHE PATENTANMELDUNG**

(21) Anmeldenummer: 82110519.4

(22) Anmeldetag: 15.11.82

(51) Int. Cl.³: **C 04 B 35/00, C 21 C 5/44,
B 22 D 41/02**

(30) Priorität: 14.12.81 DE 3149485

(43) Veröffentlichungstag der Anmeldung: 22.06.83
Patentblatt 83/25

(84) Benannte Vertragsstaaten: **AT BE FR GB IT LU NL SE**

(71) Anmelder: **Dr. C. Otto & Comp. Gesellschaft mit
beschränkter Haftung, Christstrasse 9,
D-4630 Bochum 1 (DE)**

(72) Erfinder: **Grosse, Hans-Peter Dr., Kornharpener
Strasse 174, D-4630 Bochum (DE)**
Erfinder: **Schulz, Peter, Dr. Dipl.-Ing., Sudholzstrasse 96,
D-4630 Bochum (DE)**

(74) Vertreter: **Radt, Finkener, Ernesti Patentanwälte,
Heinrich-König-Strasse 119, D-4630 Bochum 1 (DE)**

(54) Verfahren zur Herstellung von ungebrannten feuerfesten Steinen.

㊼ Die Erfindung betrifft ein Verfahren zur Herstellung von ungebrannten feuerfesten Steinen aus feuerfesten Stoffen mit einem Kohlenstoffgehalt bis zu 20%, bei dem dem Gemisch der feuerfesten Stoffe gepulvertes Hartpech in einer Menge von 0,5 bis 15, vorzugsweise 3 bis 5 Gew.-% zugesetzt, die aufbereitete Masse zu Steinen verdichtet wird und die Steine anschließend bei einer Temperatur von etwa 100°C getrocknet werden. Gegenstand der Erfindung ist ferner die Verwendung derartiger feuerfester Steine zum Einsatz in metallurgischen Schmelz- und Transportgefässen.

Die Erfindung betrifft ein Verfahren zur Herstellung von ungebrannten feuerfesten Steinen aus feuerfesten Stoffen, wie Quarzit, Schamotte, Sillimanit, Andalusit, Mullit, Korund oder anderen feuerfesten Stoffen wie MgO oder Spinell mit einem Kohlenstoffgehalt bis zu 20 Gew.-%.

Es ist seit langem bekannt, daß die Verschlackungsbeständigkeit von feuerfesten Steinen wesentlich verbessert werden kann, wenn man die Poren mit Kohlenstoff füllt. Die Hauptursache für diesen Effekt wird in der günstigen Beeinflussung des Benetzungswinkels gesehen. Die ersten Steine mit hohem Kohlenstoffgehalt wurden durch Mischen von feuerfesten Stoffen mit heißem Teer, anschließende Verformung der Mischung zu Steinen und Abkühlung vor dem Einsatz gefertigt. Man hat derartige Mischungen auch schon direkt durch Stampfen, Rütteln oder Vibrieren in Ofenaggregate eingebracht.

Zum Stande der Technik gehören ferner feuerfeste Steine, die gegebenenfalls im Vakuum bis zur weitgehenden Füllung der offenen Poren mit flüssigem Teer oder ähnlichen hochkohlenstoffhaltigen Flüssigkeiten getränkt wurden. Diese Steine werden anschließend bei erhöhter Temperatur bis zum vollständigen Austreiben der flüchtigen Bestandteile in besonderen Heizbehältern getempert. Aus der DE-OS 2 736 442 ist ein Verfahren zur Herstellung chemisch gebundener, kohlenstoffhaltiger feuerfester Steine bekannt, bei dem dem Ausgangsmaterial ein chemisches Bindemittel sowie Kohlenstoff zugesetzt, das Gemisch verformt und bei Temperaturen bis zu 800 °C getempert wird.

In der Zeitschrift "Stahl und Eisen", 1981, Heft 19, wird auf den Seiten 33 bis 36 über die Verwendung von ungebrannten kohlenstoffhaltigen Steinen in Torpedopfannen berichtet und darauf hingewiesen, daß die Entwicklung ungebrannter Steine in zwei Richtungen geht, nämlich die Herstellung durch Bindung mit Teer und/oder Pech und möglichst zusätz-

- 2 -

liche Temperung bei Temperaturen zwischen 200 und 700°C, sowie die Herstellung unter Zusatz von Kohlenstoff mit chemischer Bindung und Temperung bei 200 bis 400°C.

Der Erfindung liegt die Aufgabe zugrunde, die Herstellung von kohlenstoffhaltigen ungebrannten feuerfesten Steinen zu vereinfachen und besteht, ausgehend von einem Verfahren der eingangs beschriebenen Art darin, daß dem Gemisch der feuerfesten Stoffe gepulvertes Hartpech (Pech mit einem über 75°C liegenden Erweichungspunkt) in einer Menge von 0,5 bis 15, vorzugsweise 3 bis 5 Gew.-% zugesetzt, die aufbereitete Masse vorzugsweise unter einem Druck von 20 bis 100 N/mm$^2$ zu Steinen verdichtet wird und daß die Steine anschließend bei einer Temperatur von etwa 100°C getrocknet werden. Weitere Merkmale ergeben sich aus den Unteransprüchen.

Der Erfindung liegt die überraschende Erkenntnis zugrunde, daß es möglich ist, ungebrannte feuerfeste Steine mit guter Verschlackungsbeständigkeit herzustellen, bei denen sowohl auf eine chemische Bindung, z.B. durch Zusatz von Aluminiumphosphat als auch auf eine anschließende Temperung bei Temperaturen zwischen 200 und 800°C verzichtet werden kann. Der Zusatz von gepulvertem Hartpech zu dem feuerfesten Gemisch und dessen trockene Verpressung führt zu einem vereinfachten und umweltfreundlicheren Herstellungsverfahren auch in Vergleich mit dem bekannten Verfahren, bei dem die feuerfesten Stoffe mit Teer und/oder Pech gebunden werden, da diese Stoffe bei erhöhter Temperatur in flüssigem Zustand zugesetzt werden müssen und sich eine anschließende Temperung in der Praxis nicht vermeiden läßt.

Die nach dem Verfahren gemäß der Erfindung hergestellten Steine haben Festigkeiten, die ausreichen, um sie unbeschädigt in metallurgische Schmelz- bzw. Transportgefäße einzubauen. Gegenstand der Erfindung ist daher auch die Ver-

-3-

wendung derartiger Steine zum Einsatz in metallurgischen Schmelz- und Transportgefäßen.

Ausführungsbeispiel:

Einer feuerfesten Mischung mit folgender Zusammensetzung:

| | | |
|---|---|---|
| Andalusit | 0 bis 4 mm | 80 Gew.-% |
| | 0 bis 0,15 mm | 10 Gew.-% |
| Korund | 0 bis 0,4 mm | 5 Gew.-% |
| Ton (35 % $Al_2O_3$) | | 5 Gew.-% |
| | | 100 Gew.-% |

wurden folgende Stoffe zugesetzt:

| | |
|---|---|
| Pulverförmiges Hartpech (Erweichungspunkt 100 C) | 3 Gew.-% |
| Graphit | 4 Gew.-% |
| Sulfitablauge (als Anmachmittel) | 2 Gew.-% |
| Wasser | 1 Gew.-%. |

Die Masse wurde in einem Rechenmischer aufbereitet und unter einem Druck von 85 $N/mm^2$ auf einer hydraulischen Presse verdichtet. Die Verpreßbarkeit des Gemisches war gut. Die Steine wurden in einem Tunneltrockner bei 100 °C getrocknet und hatten danach eine Druckfestigkeit von 25 $N/mm^2$.

Die Steine wurden in einer Roheisenpfanne unterhalb der Schlackenzone eingesetzt. Sie hielten der mechanischen und thermischen Beanspruchung des Betriebes stand.

Radt, Finkener, Ernesti
Patentanwälte
Heinrich-König-Straße 119
4630 Bochum
Fernsprecher (02 34) 47737 / 38
Telegrammadresse: Radtpatent Bochum

82 901
EEF/US

Verfahren zur Herstellung von ungebrannten feuerfesten Steinen

Patentansprüche

1. Verfahren zur Herstellung von ungebrannten feuerfesten Steinen aus feuerfesten Stoffen, wie Quarzit, Schamotte, Sillimanit, Andalusit, Mullit, Korund oder anderen feuerfesten Stoffen wie MgO oder Spinell mit einem Kohlenstoffgehalt bis zu 20 Gew.-%, d a d u r c h g e k e n n z e i c h n e t , daß dem Gemisch der feuerfesten Stoffe gepulvertes Hartpech in einer Menge von 0,5 bis 15 Gew.-%, vorzugsweise 3 bis 5 Gew.-% zugesetzt, die aufbereitete Masse vorzugsweise unter einem Druck von 20 bis 100 N/mm$^2$ zu Steinen verdichtet wird und daß die Steine anschließend bei einer Temperatur von etwa 100°C getrocknet werden.

2. Verfahren nach Anspruch 1, dadurch gekennzeichnet, daß dem Gemisch der feuerfesten Stoffe außer dem pulverförmigen Hartpech, Graphit oder ein anderer hochkohlenstoffhaltiger Feststoff in einer Menge bis zu etwa 8 % zugegeben wird.

3. Verfahren nach den Ansprüchen 1 und 2, dadurch gekennzeichnet, daß der Kohlenstoffgehalt des getrockneten Steins bis zu 15 Gew.-% beträgt.

4. Verfahren nach den Ansprüchen 1 bis 3, dadurch gekennzeichnet, daß der feuerfesten Mischung eine organische Flüssigkeit, in der das Hartpech teilweise lösbar ist, wie z.B. Heizöl, in einer Menge bis zu 5 %, bezogen auf den Hartpechgehalt, zugesetzt wird.

- 2 -

5. Verwendung eines nach dem Verfahren gemäß den Ansprüchen 1 bis 4 hergestellten ungebrannten feuerfesten Steins zum Einsatz in metallurgischen Schmelz- und Transportgefäßen.